# EUROPÄISCHE PATENTANMELDUNG

(11) **EP 2 070 992 A1**
(43) Veröffentlichungstag der Anmeldung: **17.06.2009**
(21) Anmeldenummer: 07122862.1
(22) Anmeldetag: 11.12.2007
(51) Int. Cl.: C09C 1/30

(54) **Lacksysteme**

(71) Anmelder: Evonik Degussa GmbH, 45128 Essen (DE)
(72) Erfinder: Michael, Günther, Dr., 63791 Karlstein (DE); Meyer, Jürgen, Dr., 63811 Stockstadt (DE)
(74) Vertreter: Hirsch, Hans-Ludwig

(57) **Zusammenfassung**

Lacksysteme, **dadurch gekennzeichnet, dass** sie 0,5 Gew.-% bis 30 Gew.-% eines hydrophilen strukturmodifizierten, gegebenenfalls nachvermahlenen pyrogen hergestellten Siliziumdioxids enthalten.

## Beschreibung

Die Erfindung betrifft Lacksysteme.

Es ist bekannt, pyrogen hergestelltes Siliciumdioxid in Lacke einzuarbeiten.

Aus dem Dokument Schriftenreihe Pigmente No. 18 (April 1980) Seite 4 ist bekannt, hydrophobes pyrogen hergestelltes Siliziumdioxid (Aerosil® 972) zusammen mit Pigmenten und Füllstoffen in Lacke einzuarbeiten. So wird zur Herstellung eines Klarlackes die Herstellung einer ca. 10 %igen Paste in der jeweiligen Bindemittellösung empfohlen, wobei bekannte Dispergiergeräte eingesetzt werden können. Die so hergestellte Paste wird als Reibgut für die weiteren Schritte zur Herstellung des Lackes verwendet.

Es ist weiterhin bekannt, silanisiertes, strukturmodifiziertes pyrogen hergestelltes Siliciumdioxid in Lacke einzuarbeiten, wobei das Bindemittel mit Lösungsmittel vermischt und zu dieser Mischung das Siliziumdioxid mittels Hochgeschwindigkeitsmischer eingemischt wird. Die Mischung wird anschließend mittels einer Perlmühle dispergiert (WO 2004/020532).

Es ist weiterhin bekannt, eine Dispersion von pyrogen hergestelltem Siliziumdioxid, welche dadurch gekennzeichnet ist, dass sie ein strukturmodifiziertes silanisiertes Siliziumdioxid und ein Lösungsmittel enthält, zur Herstellung von Lacken zu verwenden, die dadurch gekennzeichnet sind, dass die Lacke neben einer höheren Kratzbeständigkeit weniger eine unerwünschte Haze beziehungsweise einen unerwünschten Grauschleier aufweisen (WO 2007/128636).

Die bekannten Verfahren, pyrogen hergestelltes Siliziumdioxid in das Lacksystem einzuarbeiten, haben den Nachteil, dass die derart hergestellten Klarlacke eine zu geringe Farbbrillanz zeigen, gemessen an der Schwarzzahl My (auch Jetness genannt, Technische Information No. 1204, Degussa AG).

Es bestand somit die Aufgabe, ein Verfahren zu entwickeln, mit dem das pyrogen hergestellte Siliziumdioxid bei leichter Dispergierbarkeit derart in Lacksysteme eingearbeitet werden kann, dass die Lacke neben einer verbesserten Kratzbeständigkeit auch eine hohe Farbbrillanz zeigen, gemessen an der Schwarzzahl My.

Gegenstand der Erfindung sind Lacksysteme, die dadurch gekennzeichnet sind, dass sie 0,5 Gew.-% bis 30 Gew.-% eines hydrophilen strukturmodifizierten und gegebenenfalls nachvermahlenen pyrogen hergestellten Siliciumdioxid enthalten.

Das erfindungsgemäß eingesetzte strukturmodifizierte hydrophile, pyrogen hergestellte Siliziumdioxid kann eine Stampfdichte von 100 bis 250 g/l aufweisen.

Ausgehend von einem pyrogen hergestellten, hydrophilen Siliziumdioxid mit einer BET-Oberfläche von 200 ± 25 m²/g kann das erfindungsgemäß eingesetzte strukturmodifizierte Siliziumdioxid eine DBP-Zahl von 160 bis 240 g/100g (DIN 53601) aufweisen.

Ausgehend von einem pyrogen hergestellten, hydrophilen Siliziumdioxid mit einer BET-Oberfläche von 300 ± 30 m²/g kann das erfindungsgemäß eingesetzte strukturmodifizierte Siliziumdioxid eine DBP-Zahl von 180 bis 250 aufweisen.

Der Wassergehalt sowohl der als Edukt eingesetzten Siliziumdioxide als auch der erfindungsgemäß eingesetzte strukturmodifizierten Siliziumdioxide kann kleiner 1,5 Gew.-% betragen.

Die erfindungsgemäß eingesetzte nachvermahlenen, strukturmodifizierten Siliziumdioxide können einen Grindometerwert von gleich/kleiner 60 µm, bevorzugt gleich/kleiner 40 µm, aufweisen.

Das erfindungsgemäß eingesetzte strukturmodifizierte Siliziumdioxid kann einen Wassergehalt aufweisen, der höher liegt als bei den als Edukt eingesetzten Siliziumdioxiden. Er kann maximal 3,5 Gew.-% betragen.

Ein Verfahren zur Herstellung des erfindungsgemäß eingesetzten hydrophilen, pyrogen hergestellten Siliziumdioxids kann dadurch gekennzeichnet sein, dass man hydrophiles, pyrogen hergestelltes Siliziumdioxid strukturmodifiziert und gegebenenfalls nachvermahlt.

Die Strukturmodifizierung wird mittels Kugelmühle oder einer kontinuierlich arbeitenden Kugelmühle durchgeführt. Vor und/oder während der Strukturmodifizierung kann man dem Siliziumdioxid Wasser zusetzen. Dies kann in einer Menge15 von 0,5 bis 5 Gew.-%, bevorzugt 0,5 bis 2 Gew.-%, erfolgen. Sie bewirkt eine niedrigere Verdickungswirkung.

Nach der Strukturmodifizierung ist die DBP-Zahl niedriger beziehungsweise sie kann nicht festgestellt werden.

Durch die Strukturmodifizierung wird der Grindometerwert (Grenzkorn) erhöht. Der erhöhte Grindometerwert wird jedoch während der Nachvermahlung wieder erniedrigt.

Während der Strukturmodifizierung wird die Agglomerationsstruktur des pyrogen hergestellten Siliziumdioxids größtenteils zerstört. Dies kann aus den Figuren ersehen werden.

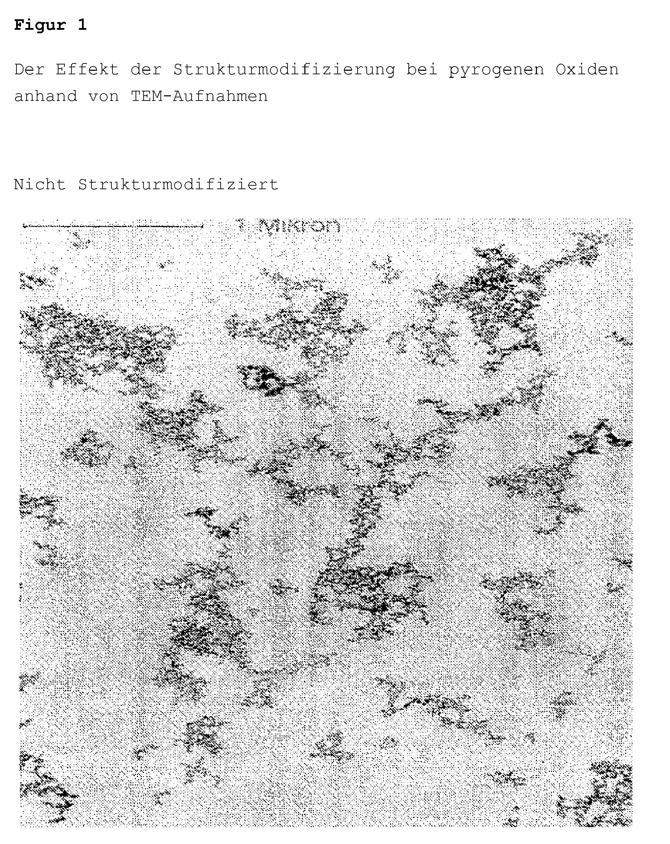

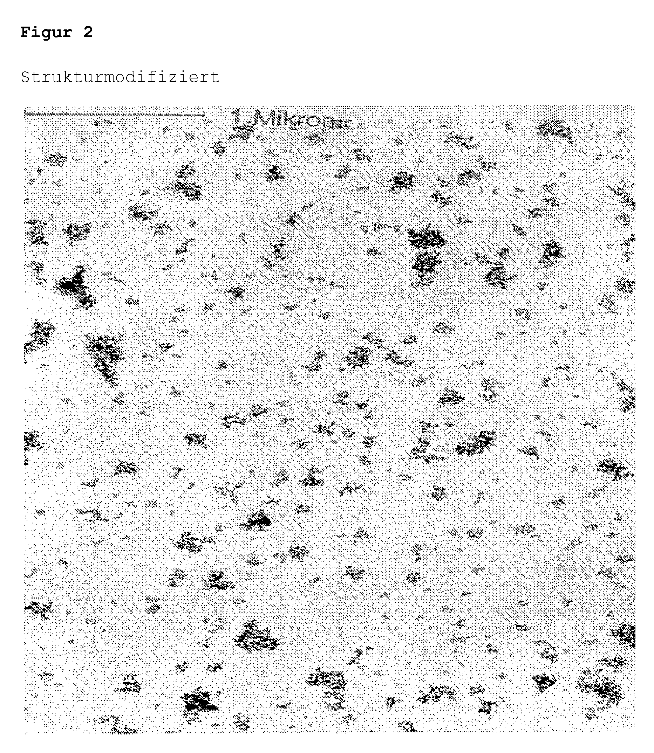

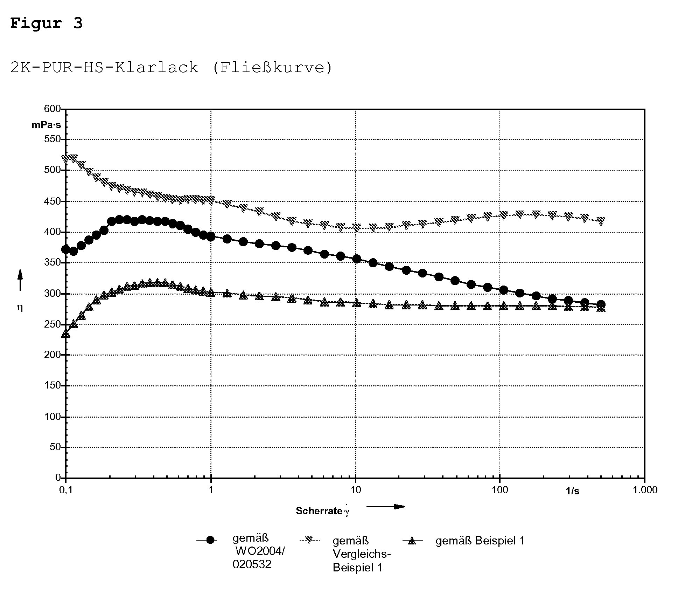

Figur 1 zeigt das ursprüngliche, pyrogen hergestellte Siliziumdioxid, während Figur 2 das strukturmodifizierte, pyrogen hergestellte Siliziumdioxid darstellt.

Das strukturmodifizierte, pyrogen hergestellte Siliziumdioxid weist eine höhere Stampfdichte auf. Die einzelnen verbliebenen Aggregate sind sphärischer. Sie können eine Verdickungswirkung von < 1400 aufweisen. Bei einem Ausgangssiliziumdioxid mit einer BET-Oberfläche von 200 ± 25 m²/g kann die Verdickungswirkung < 1000 betragen. Bei einem Ausgangssiliziumdioxid mit einer BET-Oberfläche von 300 ± 30 m²/g kann die Verdickungswirkung < 1400 sein.

Die Nachvermahlung verringert den Grindometerwert, wobei die Teilchengrößenverteilung zu kleineren Teilchen verschoben wird.

Die nach der Strukturmodifizierung verbliebene Struktur der pyrogen hergestellten Kieselsäure wird durch die Nachvermahlung nicht beeinträchtigt.

Die Nachvermahlung hat kaum Einfluss auf die anwendungstechnischen Eigenschaften der strukturmodifizierten, pyrogen hergestellten Kieselsäure, da der Energieeintrag bei der Nachvermahlung geringer ist als bei der Kugelmühle.

Für die Nachvermahlung können beispielsweise die folgenden Vorrichtungen verwendet werden: Luftstrahlmühle, Zahnscheibenmühle oder Stiftmühle. Bevorzugterweise kann eine Luftstrahlmühle eingesetzt werden.

Nach der Strukturmodifizierung und/oder Nachvermahlung kann eine Temperung durchgeführt werden. Diese Temperung kann batchweise, zum Beispiel in einem Trockenschrank oder kontinuierlich, zum Beispiel in einem Fließ- oder Wirbelbett erfolgen.

Als hydrophile, pyrogen hergestellte Siliziumdioxide können hydrophile, pyrogen hergestellte Siliziumdioxide eingesetzt werden, die eine BET-Oberfläche von 50 ± 30 bis 380 ± 30 m²/g aufweisen. Besonders bevorzugt können hydrophile, pyrogen hergestellte Siliziumdioxide eingesetzt werden, die eine BET-Oberfläche von 200 ± 25 oder 300 ± 30 m²/g aufweisen.

Insbesondere können die folgenden in der Tabelle 1 aufgeführten hydrophilen, pyrogen hergestellten Siliziumdioxide eingesetzt werden.

**Tabelle 1**

| | | AEROSIL® 200 | AEROSIL® 300 |
|---|---|---|---|
| CAS-Reg Nummer | | | |
| Verhalten gegenüber Wasser | | | |
| Aussehen | | | |
| Oberfläche nach BET¹⁾ | m²/g | 200 ± 25 | 300 ± 30 |
| Mittlere Größe der Primärteilchen | mm | 12 | 7 |
| Stampfdichte ²⁾ normale Ware | g/l | ca. 50 | ca. 50 |
| verdichtete Ware | g/l | ca. 120 | ca. 120 |
| (Zusatz "V") | | | |
| Trocknungsverlust ³⁾ (2 h bei 105 °C) bei Verlassen des Lieferwerkes | % | < 1,5 | < 1,5 |
| Glühverlust ⁴⁾⁷⁾ (2 h bei 1.000 °C) | % | < 1 | < 2 |
| pH-Wert ⁵⁾ (in 4%iger wäßriger Dispersion) | | 3,7 - 4,7 | 3,7 - 4,7 |
| SiO₂ ⁸⁾ | % | > 99, 8 | > 99, 8 |
| Al₂O₃ ⁸⁾ | % | < 0,05 | < 0,05 |
| Fe₂O₃ ⁸⁾ | % | < 0,003 | < 0,003 |
| TiO₂ ⁸⁾ | % | < 0,03 | < 0,03 |
| HCl ⁸⁾¹⁰⁾ | % | < 0,025 | < 0,025 |
| Siebrückstand ⁶⁾ (nach Mocker, 45 µm) | % | < 0,05 | < 0, 05 |

| | | | |
|---|---|---|---|
| 1) in Anlehnung an DIN 66131 2) in Anlehnung an DIN ISO 787/XI, JIS K 5101/18 (nicht gesiebt) 3) in Anlehnung an DIN ISO 787/II, ASTM D 280, JIS K 5101/21 4) in Anlehnung an DIN 55921, ASTM D 1208, JIS K 5101/23 5) in Anlehnung an DIN ISO 787/IX, ASTM D 1208, JIS K 5101/24 6) in Anlehnung an DIN ISO 787/XVIII, JIS K 5101/20 7) bezogen auf die 2 Stunden bei 105 °C getrocknete Substanz 8) bezogen auf die 2 Stunden bei 1.000 °C geglühte Substanz 9) spezielle vor Feuchtigkeit schützende Verpackung 10) HCl-Gehalt in Bestandteil des Glühverlustes | | | |

### Beispiele

Das hydrophile, pyrogen hergestellte Siliziumdioxid Aerosil® 200 beziehungsweise das hydrophile, pyrogen hergestellte Siliziumdioxid Aerosil® 300 werden mittels einer Kugelmühle strukturmodifiziert. Dabei wird - wie in der Tabelle 2 angegeben - Wasser hinzugegeben und nachvermahlen.

Die erhaltenen strukturmodifizierten Siliziumdioxide weisen einen höheren Trocknungsverlust als das Ausgangssiliziumdioxid auf.

Die physikalisch-chemischen Daten der erhaltenen strukturmodifizierten, hydrophilen Siliziumdioxide sind in der Tabelle 3 dargestellt.

**Tabelle 2**

| Bezeichnung | **Oxid/Edukt** | **Strukturmodifizierung** | **Teile H₂O/ 100 Teile Oxid** | **Nachvermahlung *** |
|---|---|---|---|---|
| Vergleichsbeispiel 1 | AEROSIL® 200 | Nein | - | Nein |
| Vergleichsbeispiel 2 | AEROSIL® 300 | Nein | - | Nein |
| Beispiel 1 | AEROSIL® 200 | Ja | 1,0 | Nein |
| Beispiel 2 | AEROSIL® 200 | Ja | 1,5 | Nein |
| Beispiel 3 | AEROSIL® 200 | Ja | 2,0 | Nein |
| Beispiel 4 | AEROSIL® 200 | Ja | 5, 0 | Nein |
| Beispiel 5 | AEROSIL® 200 | Ja | 1,0 | ZM |
| Beispiel 6 | AEROSIL® 200 | Ja | 1,0 | LS |
| Beispiel 7 | AEROSIL® 300 | Ja | 1,33 | Nein |
| Beispiel 8 | AEROSIL® 300 | Ja | 3,0 | Nein |
| Beispiel 9 | AEROSIL® 300 | Ja | 3,0 | Nein |
| Beispiel 10 | AEROSIL® 300 | Ja | 2,0 | Nein |
| Beispiel 11 | AEROSIL® 300 | Ja | 1,0 | Nein |
| Beispiel 12 | AEROSIL® 300 | Ja | 1,0 | ZM |
| Beispiel 13 | AEROSIL® 300 | Ja | 1,0 | LS |

| | | | | |
|---|---|---|---|---|
| *: ZM = Zahnscheibenmühle LS = Luftstrahlmühle | | | | |

### Physikalisch-chemische Daten der erfindungsgemäßen Siliziumdioxide und der Vergleichssiliziumdioxide

**Tabelle 3**

| **Bezeichnung** | **Spezifische Oberfläche nach BET** **[m²/g]** | **Stampfdichte** **[g/l]** | **Trocknungsverlust** **[%]** | **Glühverlust** **[%]** | **pH-Wert** | **DBP** **[%]** | **Grindometerwert** **[µm]** | **Verdickung** |
|---|---|---|---|---|---|---|---|---|
| Vergleichsbeispiel 1 | 202 | 54 | 0,8 | 0,7 | 4,5 | 290 | 28 | 2890 |
| Vergleichsbeispiel 2 | 306 | 50 | 0,5 | 0,8 | 4,0 | 323 | 30 | 2955 |
| Beispiel 1 | 206 | 172 | 1,3 | 0,8 | 4,4 | 219 | 175 | 290 |
| Beispiel 2 | 203 | 184 | 1,8 | 0,8 | 4,5 | 201 | - | - |
| Beispiel 3 | 204 | 179 | 2,1 | 0,8 | 4,5 | 198 | - | - |
| Beispiel 4 | 202 | 189 | 4,6 | 1,0 | 4,6 | 186 | - | - |
| Beispiel 5 | 204 | 142 | 1,3 | 0,8 | 4,7 | 204 | 150 | 350 |
| Beispiel 6 | 203 | 31 | 0.9 | 1,0 | 4,5 | 199 | 30 | 760 |
| Beispiel 7 | 311 | 133 | 1,2 | 1,1 | 4,4 | 232 | - | - |
| Beispiel 8 | 309 | 185 | 2,8 | 1,2 | 5,7 | 197 | - | - |
| Beispiel 9 | 308 | 181 | 3,0 | 1,2 | 4,2 | 215 | - | - |
| Beispiel 10 | 308 | 144 | 2,0 | 1,0 | 4,3 | 227 | - | - |
| Beispiel 11 | 306 | 127 | 1,3 | 1,0 | 4,4 | 230 | 175 | 330 |
| Beispiel 12 | 306 | 117 | 1,1 | 1,1 | 4,4 | 230 | 150 | 310 |
| Beispiel 13 | 307 | 27 | 1,0 | 1,0 | 4,3 | 206 | 50 | 735 |

Die Tabelle 3 zeigt an Hand von verschiedenen physikalisch-chemischen Daten die Auswirkungen der Strukturmodifizierung und der Nachvermahlung auf die hydrophilen, pyrogen hergestellten Siliziumdioxide AEROSIL® 200 und AEROSIL® 300.

Das AEROSIL® 200 besitzt im unbehandelten Zustand eine Oberfläche von 202 m²/g. Diese wird durch die Strukturmodifizierung und die Nachvermahlung nicht beeinflusst oder verändert (siehe Vergleichsbeispiel 1 sowie die Beispiele 1 bis 6).

Die Stampfdichte wird durch die Strukturmodifizierung erhöht. Durch die anschließende Nachvermahlung wird die Stampfdichte jedoch wieder erniedrigt (siehe Beispiele 5 und 6).

Die DBP-Zahl wird durch die Strukturmodifizierung erniedrigt. Sie bleibt jedoch unbeeinflusst von der Nachvermahlung.

Der Grindometerwert wird durch die Strukturmodifizierung erhöht und durch die Nachvermahlung auf den ursprünglichen Wert zurückgeführt, wenn zur Nachvermahlung die Luftstrahlmühle verwendet wird.

Die Verdickungswirkung des hydrophilen, pyrogen hergestellten Siliziumdioxids wird durch die Strukturmodifizierung deutlich erniedrigt, jedoch durch die Nachvermahlung etwas erhöht.

### Grindometerwert

### Grundlagen:

Der Grad der Dispergierung bestimmt die anwendungstechnischen Eigenschaften der mit Aerosil verdickten Flüssigkeit. Die Messung des Grindometerwertes dient zur Beurteilung des Dispergiergrades. Unter dem Grindometerwert versteht man die Grenzschichtdicke, unterhalb derer die vorliegenden Stippen beziehungsweise Aggregate auf der Oberfläche der ausgestrichenen Probe sichtbar werden.

Die Probe wird mit einem Schaber in einer Rinne ausgestrichen, deren Tiefe an einem Ende doppelt so groß ist, wie der Durchmesser der größten Aerosilpartikel und zum anderen Ende stetig bis 0 abnimmt. Auf einer die Tiefe der Rinne angegebenen Skala wird derjenige Wert für die Tiefe in Mikrometer abgelesen, unterhalb dessen eine größere Anzahl von Aerosilpartikel durch Stippen oder Kratzer auf der Oberfläche des Bindemittelsystems sichtbar werden. Der abgelesene Wert ist der Grindometerwert des vorliegenden Systems.

### Geräte und Reagenzien:

Grindometer nach Hegmann mit einem Tiefenbereich von 100-0 Mikrometer.
Dispersion Polyesterharz mit 2 % Aerosil, hergestellt nach Prüfanweisung 0380.

### Die Prüfanweisung lautet wie folgt:

Geräte und Reagenzien:
Dispermat AE02-C1, VMA-Getzmann (Dispergierscheibe, Durchmesser 5 cm)
Kunststoffbecher, 350 ml, äußerer Durchmesser 8,4 cm passender Kunststoffdeckel
Monostyrollösung (100 g Monostyrol + 0,4 g Paraffin) Palatal® P6-01, DSM Composite Resins
Zentrifuge, Jouan GmbH
Temperierschrank

### Durchführung:

In einen Kunststoffbecher werden 142,5 g Palatal® eingewogen und 7,5 g Aerosil zugewogen; anschließend wird das Aerosil vorsichtig mit dem Dispermat bei etwa 1000 min⁻¹ in das Palatal eingerührt (eventuell anhaftende Aerosilreste an den Becherwänden werden bei abgeschaltetem Dispermat mit Hilfe eines Pinsels in den Becher gebracht) und danach wird 5 min bei 3000 min⁻¹ (Abstand der Dispergierscheibe zum Becherboden ca. 1 mm) dispergiert; dabei wird der Becher mit einem durchbohrten Deckel abgedeckt.

60 g der Dispersion und 27 g Monostyrollösung werden in einen weiteren Kunststoffbecher mit 63 g Palatal® P6 gegeben und mit dem Dispermat 3 min bei 1500 min⁻¹ dispergiert (Becher abgedeckt).

Es ergibt sich eine Konzentration von 2 % Aerosil im Endgemisch, das 18 % Monostyrol enthält.

Zur Entfernung von Luftbläschen wird der Kunststoffbecher verschlossen in einer Laborzentrifuge 2,5 min bei 2500 min⁻¹ zentrifugiert. Die Dispersion bleibt 1 h 50 min im abgedeckten Becher im Temperierschrank bei 22 °C stehen.

### A. Herstellung einer Mischung von ungesättigten Polyesterharzen mit Siliziumdioxid als Füllstoff

Mit der hier beschriebenen Arbeitsanweisung werden Mischungen von hydrophilen AEROSIL®-Typen und ungesättigten Polyesterharzen hergestellt, um die Körnigkeit und das Verdickungsvermögen der Kieselsäuren zu charakterisieren.

### Formulierung

| | | |
|---|---|---|
| 98 % | Palatal A 410 | (von BÜFA) |
| 2 % | Kieselsäure | |

205,8 g Palatal A 410 und 4,2 g Siliziumdioxid werden in einem PE-Becher eingewogen und die Dissolverscheibe vollständig eingetaucht. Dann wird das Siliziumdioxid bei einer Geschwindigkeit n1 = 1000 min ⁻¹ bei geschlossenem Deckel homogenisiert (eingearbeitet). Sobald das Siliziumdioxid vollständig eingearbeitet ist, wird die Geschwindigkeit auf n2 = 3000 min ⁻¹ erhöht und 5 Minuten dispergiert. Anschließend wird die Mischung im Vakuumschrank entlüftet und mindestens 90 Minuten in einem Wasserbad bei 25°C gelagert.

### B. Messung der Viskosität von Harzen mit Siliziumdioxid als Füllstoff

Harze (z.B. Polyesterharz, UP-Harz, Vinylesterharz) enthalten im allgemeinen zur Verbesserung der anwendungstechnischen Eigenschaften Füllstoffe. Je nach Einsatzgebiet beeinflussen Art und Konzentration des verwendeten Füllstoffs das rheologische Verhalten des Harzes. Es wird ein Rheometer vom Typ Brookfield DV III verwendet. Mit einem Spatel wird die Mischung 1 min lang im Aufbewahrungsbehälter homogenisiert. Dabei sollten keine Blasen entstehen. Anschließend wird die Mischung in einen 180 ml Becher gefüllt, bis er fast voll ist. Ohne Verzögerung wird der Meßkopf des Rheometers in die Mischung vollständig eingetaucht und wie folgt gemessen:

| | | |
|---|---|---|
| 5 Upm | Wert ablesen nach | 60 s |
| 50 Upm | Wert ablesen nach | 30 s |

Die abgelesenen Werte sind die Viskositäten [Pa*s] bei den jeweiligen Upm.

### C. Bestimmung des Grindometerwertes nach DIN 53 203

### Prüfgerät

Es wird ein Grindometerblock nach Hegmann verwendet.

### Durchführung der Messungen

Der Grindometerblock wird auf eine ebene, rutschsichere Fläche gelegt und unmittelbar vor der Prüfung sauber abgewischt. Dann wird eine blasenfreie Probe an der tiefsten Stelle der Rinne so eingefüllt, dass sie etwas über den Rand der Rinne hinwegfliest. Der Schaber wird nun mit beiden Händen gefasst und senkrecht zum Grindometerblock und im rechten Winkel zu seiner Längskante mit leichtem Druck auf das tiefe Ende der Rinne aufgesetzt. Dann wird die Probe durch langsames, gleichmäßiges Ziehen des Schabers über den Block in die Rinne ausgestrichen. Spätestens 3 Sekunden nach dem Abstreifen der Probe wird die Körnigkeit abgelesen.

Die Oberfläche der Probe wird quer zur Rinne schräg von oben (unter einem Winkel von 20-30° zur Fläche) betrachtet. Dabei wird der Block so zum Licht gehalten, daß die Oberflächenstruktur der Probe gut zu erkennen ist.

Auf der Skala wird als Körnigkeit der Wert in Mikrometer festgestellt, unterhalb dessen eine größere Anzahl von Kieselsäure-Körnern al Stippen oder Kratzer auf der Oberfläche sichtbar wird. Einzelne, zufällig aufgetretene Stippen oder Kratzer werden dabei nicht berücksichtigt.

Die Körnigkeit wird mindestens zweimal beurteilt, und zwar jeweils an einer neu ausgestrichenen Dispersion.

### Auswertung:

Aus den Messwerten wird der arithmetische Mittelwert gebildet.
Zwischen dem Grindometerwert in Mikrometer und den auf dem Zollsystem basierenden Hegmann-Einheiten und FSPT-Einheiten besteht folgender Zusammenhang:
B = 8 -0,079 A
C = 10 -0,098 A = 1,25 B

### Hierin bedeuten:

A = Grindometerwert in Mikrometer
B = Grindometerwert in Hegmann-Einheiten
C = Grindometerwert in FSPT-Einheiten

**Tabelle 4: Rezeptur 2K-PUR-HS-Klarlack**

| **Reibgut** | **Nullprobe** | **Siliziumdioxidpulver** |
|---|---|---|
| Macrynal SM 565, 70% | 61,0 | 61,0 |
| Butylacetat | 9,3 | 9,3 |
| Methoxypropylacetat | 1,7 | 1,7 |
| Solvesso 100 | 3,0 | 3,0 |
| Xylol | 2,7 | 2,7 |
| Siliziumdioxidpulver | - | 5,0 |

| **Härter** | | |
|---|---|---|
| Desmodur N 3390, 90% | 22,3 | 22,3 |
| □ | 100,0 | 105,0 |

### Herstellung und Prüfung der Lacke:

| | |
|---|---|
| Vordispergierung | 2,5-fache Reibgutmenge 5 min mittels Dissolver bei 2500 Upm dispergieren |
| Dispergierung | Perlmühle SL 5, 2500 Upm, Pumpe 50%, Zeit: 45 min 0,5 mm Ce-stabilisierte ZrO₂ Perlen Grindometerwert nach 15 min <10 µm |
| Zugabe des Härters | Der Härter Desmodur N 3390 wird unter Rühren (1000 Upm) zugegeben, anschließend wird für etwa 1 min homogenisiert |
| Viskositätsmessung | Erstellen von Fließkurven des Reibgutes am nächsten Tag und Fließ- und Sprungkurven des Lackes 15 min nach Zugabe des Härters: - Fließkurve: γ̇ = 50 s-1 (30 s) Ruhen (600 s) γ̇ = 0,1 s-1 bis 500 s-1 (150 s) |
| Applikation | Spritzapplikation bei 21s DIN 4 mm auf schwarz lackierte Bleche (DT36) mit einem Spritzautomaten Einstellung: 1 Kreuzgang bei Einstellung 3,5 Trockenschichtdicke: ca.40 µm Spritzverdünnung: Butylacetat 98% 60 Xylol 25 Solvesso 15 |
| Trocknungsbedingungen | ca. 24 h bei RT, anschließend 2 h bei 70°C |
| 20°-Reflektometer-wert Haze | Die Beurteilung des Glanzes und des Schleiers erfolgt an Lackfilmen, die auf schwarze Bleche appliziert sind, mit einem Reflektometer der Fa. Byk Gardner |
| Schwarzzahl My (Beurteilung der Transparenz) | Die Bestimmung erfolgt an Lackfilmen, die auf schwarz gespritzte Bleche appliziert sind, mit einem Densitometer D19C der Fa. Gretag Macbeth. Die Schwarzzahl My ist der gemessene Wert mit hundert multipliziert. |
| Wave scan (Verlauf) | Der Verlauf wird mittels eines Wave-scan plus Gerätes der Fa. Byk-Gardner beurteilt |
| Kratzfestigkeit nass | Scheuerprüfgerät der Fa. Braive Instruments unter Verwendung von Scheuerbürsten mit Schweineborsten, 40 Doppelhübe mit SiO₂-Aufschlämmung. |
| | |
| | Die Aufschlämmung wurde für jeden Scheuervorgang (4 Bleche) neu angesetzt: |
| | |
| | stark: 400 g deion. Wasser 4 g Marlon A 350, 0,25%ig in |
| | Wasser 20 g Sikron SF 500 (Quarz) |
| | |
| | 1 min mit einem Flügelrührer bei 1000 Upm homogenisiert. |
| | |
| | Die Kratzversuche wurden eine Woche nach Applikation der Lacke durchgeführt. |
| | |
| | Messung des Glanzes und des Schleiers 10 min nach dem Kratzen gegen die Kratzspuren. |
| | |
| | Der Restglanz wird in % angegeben. |
| Kratzfestigkeit trocken | Crockmeter Modell 670 (Fa. Schröder), fünf Doppelhübe unter Verwendung von Polishing Paper Grade 9MIC blue (281Q Wetordry Production - Fa. 3M) |

### Ergebnisse

**Tabelle 5: Viskosität-Auslaufzeit, optische Eigenschaften**

| | **Nullprobe** | **Dispersion gemäß WO 07/128636** | **Dispersion gemäß WO 04/020532** | **Siliziumdioxid gemäß Vergleichsbeispiel 1** | **Siliziumdioxid gemäß Beispiel 1** |
|---|---|---|---|---|---|
| Auslaufzeit DIN 4 mm (s) | 44 | 63 | 64 | 89 | 60 |
| Wave scan | | | | | |
| L | 3 | 9 | 15 | 7 | 5 |
| S | 0,3 | 3 | 13 | 2 | 3 |
| Verlauf visuell* | 1 | 2 | 3-4 | 2 | 2 |

| | | | | | |
|---|---|---|---|---|---|
| * Schulnotensystem | | | | | |

**Tabelle 6: Kratzversuche**

| **5% Sikron SF500** | Scharzzahl Mµ | Glanz vor Kratzen | Glanz nach Kratzen | **Restglanz [%]** | Haze vor Kratzen | Haze Kratzen | **ΔHaze** |
|---|---|---|---|---|---|---|---|
| **Nullprobe** | 289 | 88,0 | 32,3 | **36,7** | 8 | 102 | **94** |
| **Dispersion gemäß WO 07/128636** | 270 | 83,8 | 63,9 | **76,3** | 9 | 33 | **24** |
| **Dispersion gemäß WO 04/020532** | 278 | 84,7 | 54,1 | **63,8** | 9 | 52 | **43** |
| **Siliziumdioxid gemäß Vergleichsbeispiel 1** | 283 | 87,3 | 51,6 | **59,1** | 9 | 62 | **53** |
| **Siliziumdioxid gemäß Beispiel 1** | 281 | 86,5 | 54,0 | **62,4** | 8 | 60 | **51** |
| **Crockmeter** | | | | | | | |
| **Nullprobe** | | 88,0 | 39,4 | **44,8** | 8 | 120 | **112** |
| **Dispersion gemäß WO 07/128636** | | 83,8 | 69,6 | **83,1** | 9 | 58 | **49** |
| **Dispersion gemäß WO 04/020532** | | 84,8 | 70,7 | **83,4** | 9 | 59 | **50** |
| **Siliziumdioxid gemäß Vergleichsbeispiel 1** | | 87,3 | 61,3 | **70,2** | 9 | 83 | **74** |
| **Siliziumdioxid gemäß Beispiel 1** | | 86,5 | 65,4 | **78,8** | 9 | 64 | **55** |

Strukturmodifizierte Siliziumdioxide sind erfahrungsgemäß schwer dispergierbar. Bei den vorangegangenen Beispielen wurde daher mit einer Perlmühle dispergiert. Die nachfolgenden Beispiele zeigen den Einfluss einer Vermahlung auf die strukturmodifzierten hydrophilen Siliziumdioxide. Um die Dispergierbarkeit zu beurteilen, wurde 60 Minuten mit einem Skandex-Disperser, 500ml Glasflaschen unter Zugabe von 400 g Glasperlen (Durchmesser 3 mm) dispergiert.

**Tabelle 7:**

| | **Grindometerwert (µm) 30'** | **Schwarzzahl My** | **20°-Reflektometerwert** | **Haze** |
|---|---|---|---|---|
| Beispiel 1 | 16 | 275 | 85,7 | 21 |
| Beispiel 5 | 16 | 277 | 85,7 | 22 |
| Beispiel 6 | 10 | 276 | 86,4 | 16 |
| Beispiel 11 | 17 | 279 | 85,3 | 28 |
| Beispiel 12 | 17 | 279 | 85,3 | 29 |
| Beispiel 13 | 11 | 278 | 85,9 | 22 |

Die lacktechnischen Eigenschaften werden bei der Vermahlung nach der Variante /1 nicht nennenswert beeinflusst; überraschend ist daher dass durch das Verfahren /2 der Grindometerwert und der Haze bei der AEROSIL 200 und der AEROSIL 300-Variante deutlich verbessert wird.

## Patentansprüche

1. Lacksysteme, **dadurch gekennzeichnet, dass** sie 0,5 Gew.-% bis 30 Gew.-% eines hydrophilen strukturmodifizierten, gegebenenfalls nachvermahlenen pyrogen hergestellten Siliziumdioxids enthalten.
